# FASCICULE DE BREVET EUROPEEN

(11) **EP 4 071 001 B1**
(45) Date de publication et mention de la délivrance du brevet: **11.10.2023**
(21) Numéro de dépôt: 22163249.0
(22) Date de dépôt: 21.03.2022
(51) Int. Cl.: B60R 19/18

(54) **ABSORBEUR DE CHOCS EN MOUSSE POUR VÉHICULE AUTOMOBILE**
STOSSABSORBER AUS SCHAUMSTOFF FÜR KRAFTFAHRZEUG
FOAM SCHOCK ABSORBER FOR AUTOMOBILE VEHICLE

(30) Priorité: 22.03.2021 FR 2102842
(43) Date de publication de la demande: 12.10.2022
(73) Titulaire: Compagnie Plastic Omnium SE, 69007 Lyon (FR)
(72) Inventeur: CAVILLON, Thierry, 01150 SAINTE-JULIE (FR); ROUSSEL, Thierry, 01150 SAINTE-JULIE (FR)
(74) Mandataire: LLR

(56) Documents cités:
- EP-A1- 1 544 052
- WO-A1-2009/006142
- DE-A1- 4 119 640
- FR-A5- 2 149 827
- JP-A- 2003 341 449
- US-A- 4 061 384
- US-A1- 2017 088 074

## Description

L'invention concerne les absorbeurs de chocs en mousse pour véhicule automobile.

Les absorbeurs de chocs, aussi appelés absorbeurs d'énergie, permettent d'absorber un choc subit par un véhicule automobile.

Les absorbeurs de chocs sont généralement situés au niveau des parechocs des véhicules. Ces parechocs comprennent généralement un bouclier, également appelé peau de parechocs, qui remplit essentiellement une fonction d'enjoliveur, mais qui est également destiné à absorber des chocs de faible ampleur. Les parechocs comprennent également une ou plusieurs poutres placées transversalement derrière la peau, qui forment une barrière pour protéger l'habitacle du véhicule.

On distingue deux principaux types de chocs. Les chocs à haute vitesse, pour lesquels l'objectif principal est de protéger les occupants du véhicule, et les chocs à faible vitesse, aussi appelés chocs « assurances », chocs « parkings » et « petits chocs » pour lesquels l'objectif principal est de réduire les coûts de réparation et de protéger l'élément subissant le choc, notamment lorsqu'il s'agit d'une jambe d'un piéton. La présente invention concerne plus particulièrement les petits chocs.

Les absorbeurs de chocs sont généralement réalisés soit en matériau thermoplastique injecté, soit en mousse. Ces deux types d'absorbeurs de chocs sont utilisés afin d'obtenir des propriétés différentes. Notamment, dans une optique d'amélioration du traitement des petits chocs ou choc « parking », ce sont des absorbeurs en mousse qui seront utilisés car ce sont les seuls qui présentent la faculté de revenir en position après avoir été déformées lors d'un petit choc. Ce n'est pas le cas des absorbeurs de chocs en matériaux thermoplastiques injecté qui, une fois déformés, ne peuvent généralement plus revenir à leur position initiale. Ainsi, les absorbeurs en mousse permettent de faciliter la réparation du véhicule. Par exemple, à la suite d'un choc, il est possible que la poutre choc du véhicule doive être changée car elle est trop abimée mais que les absorbeurs de chocs puissent être conservés car ils auront retrouvé leurs formes d'origine après le choc ce qui ne serait pas possible avec des absorbeurs de chocs en matériaux thermoplastiques. Une fois que les absorbeurs de chocs en mousse ont retrouvé leurs formes d'origine, ils sont de nouveaux fonctionnels et peuvent absorber d'autres chocs. Ils ont donc une plus longue longévité que les absorbeurs de chocs en matériaux thermoplastiques.

Les absorbeurs de chocs en mousse de l'art antérieur sont de forme allongée avec une section qui est constante le long de l'absorbeur de choc et qui est soit pleine soit en une forme particulière telle qu'un « L » ou un « C ».

Dans le cas d'une section pleine, lors d'un choc, l'absorbeur de chocs est compressé par l'élément qui subit le choc. Au fur et à mesure que l'absorbeur de chocs est compressé, sa densité s'accroit, entrainant ainsi une augmentation de l'effort appliqué en retour à l'élément qui subit le choc. Une telle augmentation risque d'endommager l'élément subissant le choc de manière importante. Cela est particulièrement dommageable dans le cas où l'élément qui subit le choc est un piéton, et plus particulièrement une jambe de ce piéton.

Dans le cas d'une section en « L » ou en « C », les parois formant les branches horizontales du « L » ou du « C » se compriment peu et basculent rapidement verticalement (par référence à une position de fonctionnement du véhicule) dans un mode de déformation en déversement lors d'un choc. Un tel déversement vertical présente des inconvénients. Dans un premier cas, la paroi n'est pas bloquée lors du déversement. Il en résulte alors que la paroi formant l'extrémité du « L » ou du « C » déverse très rapidement après le choc, sans avoir le temps d'absorber une partie substantielle du choc en compression. L'absorption du choc est donc moins efficace. Dans un deuxième cas, la paroi est bloquée au cours de son déversement vertical par un autre élément du véhicule et ne pourra donc absorber le choc qu'en compression. Comme indiqué précédemment, une absorption d'un choc uniquement en compression engendre une augmentation de l'effort appliqué à l'élément subissant le choc, risquant ainsi de l'endommager.

On connait également de l'art antérieur des absorbeurs de chocs en mousse présentant une section non constante le long de l'absorbeur de chocs. Ces absorbeurs de chocs présentent ainsi une succession d'éléments d'absorption de chocs de forme trapézoïdale avec une extrémité distale dont les dimensions sont de l'ordre de celle d'un genou humain. Ainsi, lors d'un choc avec un piéton, un seul des trapèzes est impliqué et il travaille localement comme si l'absorbeur de chocs avec une section continu, c'est-à-dire principalement en compression. Comme indiqué précédemment, une telle configuration engendre un effort subi par le piéton qui augmente trop rapidement et entraine un risque de lésions importantes. Le document EP 1 544 052 A1 décrit un absorbeur de choc pour véhicule automobile selon le préambule de la revendication 1.

L'invention a notamment pour but d'améliorer l'absorption des chocs par des absorbeurs de chocs en mousse pour véhicule automobile, notamment lors d'un petit choc avec un piéton.

À cet effet, l'invention a pour objet un absorbeur de chocs pour un véhicule automobile comprenant les caractéristiques de la revendication 1.

La présence de plusieurs éléments d'absorption en forme de lame espacés les uns des autres dans la rangée présente plusieurs avantages. Lors d'un choc entre un élément, par exemple une jambe d'un piéton, et un parechoc de véhicule équipé d'un absorbeur de choc selon l'invention, la jambe est percutée dans un premier temps par la peau du parechoc. La jambe déforme cette peau qui vient en appui contre une extrémité distale d'un élément d'absorption de chocs situé derrière la peau. Dans un premier temps, la jambe compresse par l'intermédiaire de la peau cet élément d'absorption de chocs, ou, tout au plus, un ou deux autres éléments d'absorption de chocs adjacents, qui absorbent ainsi en compression une première quantité d'énergie sans imposer un effort trop important à la jambe, du fait qu'en début de choc un nombre très limité d'éléments d'absorption est mise en oeuvre. La déformation de la peau s'accentue au droit de la jambe et s'étend progressivement latéralement (c'est-à-dire horizontalement, dans le sens de la largeur du véhicule par référence à une position de fonctionnement du véhicule) au cours de l'enfoncement dû au choc. La déformation accentuée de la peau fait fléchir et basculer l'extrémité distale des premiers éléments d'absorption et initie ainsi leur mode de déformation par déversement. La déformation de la peau étendue sollicite successivement des éléments d'absorption de chocs de plus en plus éloignés du choc initial. Ainsi, même si un nombre croissant d'éléments d'absorption sont sollicités, leur contribution énergétique s'en trouve répartie permettant ainsi de maintenir l'effort quasi constant le long de la course d'enfoncement utile, l'effort appliqué en retour sur la jambe est donc lui aussi quasi constant. On entend par une forme de « lame » une forme allongée ou élancée présentant une dimension, son épaisseur, qui est faible par rapport aux autres. Cette forme en lame et la disposition verticale des éléments d'absorption de choc permet également à ceux-ci de déverser latéralement pour ne pas travailler uniquement en compression, ce qui entrainerait un effort trop important sur la jambe.

Suivant d'autres caractéristiques optionnelles pouvant être prises seules ou en combinaison :
L'absorbeur de choc est réalisé en une mousse de matériau plastique, de préférence en une mousse de polypropylène expansé.

La densité de la mousse est comprise entre 30 et 80 g/L.

L'entraxe entre deux éléments d'absorption de chocs consécutifs est constant dans toute la rangée.

L'entraxe entre les éléments d'absorption de chocs consécutifs dans la rangée augmente depuis l'élément d'absorption de chocs le plus central, c'est-à-dire l'élément d'absorption de chocs le plus éloigné des extrémités de la rangée, vers les éléments d'absorption de chocs les plus excentrés, c'est-à-dire les éléments d'absorption de chocs les plus proches des extrémités de la rangée.

Au moins un des éléments d'absorption de chocs présente une extrémité distale amincie, de préférence de forme arrondie.

L'absorbeur de chocs comprend en outre une base, les éléments d'absorption de chocs s'étendant en saillie à partir d'une même face de la base.

Chaque élément d'absorption de chocs s'étend sur toute une hauteur de la base. La base et les éléments d'absorption de chocs sont réalisés d'une seule pièce.

Au moins un des éléments d'absorption de chocs a une forme dissymétrique.

L'invention a également pour objet un système d'absorption de chocs pour un véhicule automobile, comprenant :
- un absorbeur de chocs tel que décrit précédemment, et
- une peau formant au moins une partie d'une paroi externe d'une pièce de carrosserie, l'absorbeur de chocs et la peau étant agencés de sorte qu'une distance maximale entre une extrémité distale d'au moins une partie des éléments d'absorption de chocs et la peau est comprise entre 0 et 20 mm.

De préférence, la distance entre l'extrémité distale d'une majorité voire de tous les éléments d'absorption de chocs et la peau est nulle, c'est-à-dire que ces extrémités distales et la peau sont en contact. Cela permet d'améliorer la qualité perçue par un utilisateur en empêchant notamment l'enfoncement de la peau suite à un simple contact. Afin de limiter l'impact des légers aléas de positionnement lors du montage, on peut prévoir de faire en sorte que la distance maximale soit, au minimum, nulle et, au maximum, entraine une légère compression de l'extrémité distale des éléments d'absorption de chocs par la peau.

L'invention a également pour objet un système d'absorption de chocs pour un véhicule automobile, comprenant :
- un absorbeur de chocs tel que décrit précédemment,
- une poutre rigide, et
- une peau formant au moins une partie d'une paroi externe d'une pièce de carrosserie, dans lequel l'absorbeur de chocs est fixé sur la peau en regard de la poutre rigide, et dans lequel le système est agencé de sorte qu'une distance maximale entre une extrémité distale d'au moins une partie des éléments d'absorption de chocs et la poutre rigide est comprise entre 0 et 20 mm.

L'invention a également pour objet un système d'absorption de chocs pour un véhicule automobile, comprenant :
- un absorbeur de chocs tel que décrit précédemment,
- une poutre rigide, et
- une peau formant au moins une partie d'une paroi externe d'une pièce de carrosserie, dans lequel l'absorbeur de chocs comprend une base présentant une première face et une deuxième face opposée à la première face,

dans lequel la base comprend au moins une première portion fixée soit à la poutre rigide soit à la peau par sa première face et pour laquelle un premier groupe d'éléments d'absorption s'étend à partir de la deuxième face en direction respectivement soit de la peau soit de la poutre rigide en étant agencé de sorte qu'une distance maximale entre une extrémité distale d'au moins une partie des éléments d'absorption de chocs du premier groupe et respectivement soit la peau soit la poutre rigide est comprise entre 0 et 20 mm,
et dans lequel la base comprend au moins une deuxième portion, pour laquelle la deuxième face est libre et un deuxième groupe d'éléments d'absorption de chocs s'étend à partir de la première face en direction respectivement soit de la poutre rigide soit de la peau en étant agencé de sorte qu'une distance maximale entre une extrémité distale d'au moins une partie des éléments d'absorption de chocs du deuxième groupe et respectivement soit la poutre rigide soit la peau est comprise entre 0 et 20 mm.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue en coupe longitudinale d'une partie avant d'un véhicule automobile équipé système d'absorption de chocs comprenant un absorbeur de chocs selon l'invention.
[Fig. 2] la figure 2 est une vue en perspective de l'absorbeur de choc de la figure 1.
[Fig. 3] la figure 3 est une vue en coupe transversale de l'absorbeur de chocs des figures 1 et 2 ainsi que de la peau du parechoc avant du véhicule de la figure 1 avant un choc avec une jambe de piéton.
[Fig. 4] la figure 4 est une vue similaire à la figure 3 dans un premier temps d'un choc entre la peau du parechoc et la jambe du piéton.
[Fig. 5] la figure 5 est une vue similaire à la figure 3 dans un second temps du choc entre la peau du parechoc et la jambe du piéton.
[Fig. 6] la figure 6 est une vue similaire à la figure 3 dans un troisième temps du choc entre la peau du parechoc et la jambe du piéton.
[Fig. 7] la figure 7 est une vue similaire à la figure 3 dans un quatrième temps du choc entre la peau du parechoc et la jambe du piéton.
[Fig. 8] la figure 8 est un graphique schématique représentant l'effort appliqué sur la jambe lors du choc en fonction de la déformation de la peau du parechoc.

### Description détaillée

Dans la description détaillée, la direction longitudinale (ou axe X), la direction transversale (ou axe Y) et la direction verticale (ou axe Z) font références aux directions d'un véhicule automobile et sont illustrées sur les figures.

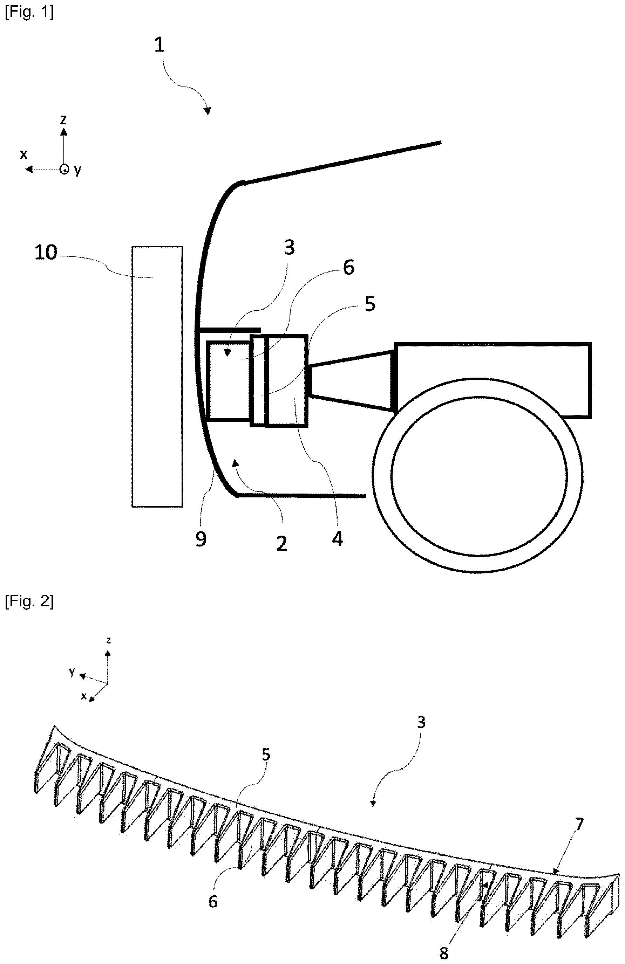

La figure 1 montre une partie avant d'un véhicule automobile 1 qui comprend notamment un parechoc avant 2, un absorbeur de chocs 3, et une poutre rigide 4, aussi appelée poutre choc. On peut prévoir que l'absorbeur de chocs 3 est présent à d'autres endroits du véhicule 1, par exemple au niveau d'un parechoc arrière (non représenté). L'absorbeur de chocs 3 est monté contre une face verticale frontale de la poutre rigide 4 du véhicule. La face verticale frontale de la poutre rigide 4 est orientée vers l'avant du véhicule 1, en regard d'une peau 9 du parechoc 2.

L'absorbeur de chocs 3 a une forme générale allongée (voir figure 2). Dans le cas présent, l'absorbeur de chocs 3 s'étend sur une plus grande partie de la largeur du véhicule 1, sa longueur est donc sensiblement égale à celle de la poutre rigide 4. L'absorbeur de chocs 3 est réalisé en mousse, notamment en mousse de polypropylène expansé (PPE). On peut prévoir que toute autre mousse susceptible d'être utilisée en tant qu'absorbeur de chocs 3 pour un parechoc de véhicule puisse être utilisée. Dans le cas présent, la densité de la mousse est comprise entre 30 et 80 g/L, de préférence entre 45 et 65 g/l. En combinaison avec les autres caractéristiques de forme et dimensionnelles des éléments d'absorption, une telle densité permet d'obtenir une bonne efficacité d'absorption d'énergie lors d'un petit choc tout en évitant que l'effort appliqué en retour sur l'élément subissant le choc ne soit trop important. Une telle matière favorise également le retour de l'absorbeur de choc 3 à sa forme de départ après avoir absorbé un choc.

L'absorbeur de chocs 3 comprend une base 5 et des éléments d'absorption de chocs 6 qui sont réalisés d'une seule pièce. Ainsi, la manipulation des éléments d'absorption de chocs 6 est facilité puisque cela évite de devoir les manipuler chacun un à un.

Dans le cas présent, la base 5 a une forme générale allongée et suit le profil de la pièce du véhicule 1 contre laquelle elle est fixée. Dans le présent mode de réalisation, cette pièce est la poutre rigide 4. La forme de la base 5 suivant le profil de la pièce du véhicule contre laquelle elle est fixée peut être obtenue de différentes manières. Dans un premier mode de réalisation, la base 5 est fabriquée en lui donnant directement la forme souhaitée. Dans un autre mode de réalisation, on peut prévoir que la base 5 est fabriquée avec une forme générale allongée rectiligne. Puis, du fait de sa souplesse, qui est notamment due à l'utilisation d'une mousse de polypropylène expansé, la base 5 est déformée lors de sa fixation sur le véhicule 1 de manière à suivre le profil de la pièce du véhicule 1 contre laquelle elle est fixée. La déformation de la base 5 permet d'écarter légèrement angulairement les éléments d'absorption 6 les uns par rapport aux autres, ce qui, comme indiqué par la suite, produit un effet favorable sur le mode de déversement des éléments d'absorption de chocs 6.

La base 5 présente deux faces principales 7, 8. Dans le mode de réalisation présenté, la première face 7 de la base 5 permet sa fixation au véhicule 1 sur la poutre choc 4.

Les éléments d'absorption de chocs 6 s'étendent tous à partir de la deuxième face 8 de la base 5. Les éléments d'absorption de chocs 6 s'étendent donc en direction de la peau 9 du parechoc avant 2. Dans le cas préféré, les extrémités distales des éléments d'absorption de chocs 6 sont en contact avec une face interne de la peau 9 du parechoc 2. Cette caractéristique permet d'améliorer la qualité de finition du parechoc 2 perçu par un utilisateur. Notamment, cette caractéristique évite que la peau 9 ne s'enfonce lors d'un simple contact avec un doigt. On peut prévoir de dimensionner les différents éléments du système de manière à ce que les extrémités distales des éléments d'absorption de chocs 6 soient au minimum en contact avec la peau 9 et au maximum légèrement compressées par cette peau 9. Cela permet de palier les éventuels légers aléas de montage. Cette disposition est rendue possible par le fait que l'absorbeur de chocs 3 est en mousse, et plus particulièrement en mousse de polypropylène expansé.

Les éléments d'absorption de chocs 6 ont une forme de lame, c'est-à-dire une forme allongée ou élancée pour laquelle une de ses dimensions, son épaisseur, est bien plus faible que ses autres dimensions. Cette épaisseur, prise à mi-longueur, est comprise entre 12 et 40 mm, de préférence entre 15 et 25mm. Ils présentent une extrémité proximale par laquelle ils sont fixés à la base 5 et une extrémité distale libre (voir figure 2). Ils ont une longueur, c'est-à-dire la distance entre l'extrémité proximale et l'extrémité distale, qui est comprise entre 50 et 120mm. Par ailleurs, les dimensions des éléments d'absorption de chocs 6 sont telles qu'un ratio la longueur d'un élément d'absorption de chocs 6 et l'épaisseur à mi-longueur de cet élément d'absorption de chocs 6 est compris entre 2 et 5, de préférence entre 3 et 4. Ce ratio représente un bon compromis pour obtenir un déversement latéral qui ne soit ni trop brutal ni trop lent.

Les lames des éléments d'absorption de chocs 6 sont configurées pour être orientées verticalement lorsque l'absorbeur de chocs 3 est monté sur le véhicule 1. Autrement dit, les deux faces principales de la lame s'étendent verticalement (selon l'axe Z) lorsque l'élément d'absorption de chocs 6 est monté sur le véhicule 1. Ils présentent tous une épaisseur qui, de préférence, diminue depuis l'extrémité proximale vers l'extrémité distale. Cette configuration permet de faciliter le déversement latéral de l'élément d'absorption de chocs 6 après une première étape d'absorption du choc en compression et permet donc d'améliorer l'absorption du choc comme cela sera décrit ci-après. L'extrémité distale des éléments d'absorption de chocs 6 est amincie de manière à faciliter plus encore le déversement latéral des éléments d'absorption de chocs 6. Ici, cette extrémité distale est même arrondie de manière à faciliter plus encore le déversement. Dans le cas présent, tous les éléments d'absorption de chocs 6 présentent une épaisseur qui diminue depuis l'extrémité proximale vers l'extrémité distale ainsi qu'une extrémité distale amincie et arrondie. On peut prévoir qu'au moins un des éléments d'absorption de chocs 6 n'a pas une telle configuration et, par exemple, qu'il présente une épaisseur qui diminue depuis l'extrémité proximale vers l'extrémité distale mais qu'il ne présente pas une extrémité distale amincie et/ou arrondie. Alternativement, on peut également prévoir qu'au moins un des éléments d'absorption de chocs 6 présente une extrémité distale amincie et/ou arrondie mais ne présente pas une épaisseur qui diminue depuis son extrémité proximale vers son extrémité distale.

Dans un mode de réalisation particulier, on peut prévoir qu'au moins un des éléments d'absorption de chocs 6 est décalé angulairement latéralement (selon l'axe Y) de manière à privilégier un sens de déversement latéral vers la gauche ou la droite du véhicule lors de l'absorption d'un choc. C'est par exemple le cas lorsque l'élément d'absorption de chocs 6 a une forme dissymétrique, avec ses deux faces principales qui forment des angles différents avec la base 5.

Chaque élément d'absorption de chocs 6 s'étend sur sensiblement toute la hauteur de la base 5. La hauteur de la base 5 correspond à sa dimension selon l'axe Z (voir figure 2). Cette configuration permet d'assurer que le choc sera correctement absorbé quel que soit la position selon l'axe vertical Z où a lieu le choc sur le parechoc pour une élément d'absorption de chocs 6 donné. En effet, dans le cas d'absorbeurs de chocs de l'art antérieur en forme de « C » ou de « L », il existe un espace, soit entre les deux parois du « C », soit en-dessus ou en dessous de la paroi du « L », pour lequel un élément subissant un choc contre le parechoc ne rencontrerait aucune paroi de l'absorbeur de choc.

Dans le cas présent, l'absorbeur de chocs 3 comprend vingt-quatre éléments d'absorption de chocs 6 (voir figure 2). Bien entendu, l'absorbeur de chocs 3 peut comprendre un nombre plus élevé ou plus faible d'éléments d'absorption de chocs 6 en fonction de différents paramètres tels que la taille du véhicule, les dimensions des éléments d'absorption de chocs 6 ou encore les entraxes 11 entre les éléments d'absorption de chocs 6. Les éléments d'absorption de chocs 6 forment une rangée et se succèdent le long de la base 5 avec un entraxe 11 qui est, dans le cas présent, sensiblement constant. Dans d'autres modes de réalisations, on peut prévoir que cet entraxe 11 n'est pas constant entre les éléments d'absorption de chocs 6 successifs, par exemple qu'au moins un entraxe 11 soit différent des autres. L'entraxe 11 est compris entre 30 et 120 mm, selon son l'épaisseur et la densité de la matière, De préférence, les entraxes 11 au sein d'un même absorbeur de chocs 3 sont dans une plage de 40 mm, par exemple compris entre 30 et 70 mm ou entre 80 et 120. Comme indiqué précédemment et comme il sera explicité ci-après, le fait que les éléments d'absorption de chocs 6 se succèdent le long de la base avec un entraxe 11 compris entre 30 et 120 mm permet d'éviter que l'effort appliqué en retour sur un élément subissant un choc avec le parechoc 2 n'augmente trop fortement au cours du choc, ce qui risquerait d'endommager cet élément. Cela permet en outre d'éviter que le déversement latéral des éléments d'absorption de chocs 6 ne se fasse de manière complète trop rapidement. En effet, l'entraxe 11 bien défini entre les éléments d'absorption de chocs leur permet, au fur et à mesure de l'enfoncement dû au choc, de basculer latéralement et ainsi de passer en transition d'un mode de déformation en compression à un mode de déformation en déversement : au cours de ce déversement ceux qui ont le plus basculé latéralement viennent en contact et en appui contre un élément d'absorption de chocs adjacent, ce qui empêche que le déversement latéral ne se fasse trop rapidement et alors sans absorber une quantité substantielle d'énergie. Par un entraxe 11 entre deux éléments d'absorption de chocs 6 consécutifs on entend la distance entre deux points homologues des axes longitudinaux principaux de ces deux éléments d'absorption de chocs 6. Il peut par exemple s'agir du point de l'axe le plus distal ou proximal sur l'élément d'absorption de chocs 6, ou encore du point situé à mi-hauteur de l'élément d'absorption de chocs. Ce point est donc situé à des niveaux comparables, ou homologues, pour les différents éléments d'absorption de chocs 6. On peut prévoir que l'entraxe 11 entre tous les éléments d'absorption de chocs 6 est constant sur toute la longueur de la base 5. On peut également prévoir que cet entraxe 11 varie entre plusieurs éléments d'absorption de chocs 6 afin d'obtenir un résultat particulier, en concentrant ou en espaçant les éléments d'absorption de chocs 6 de manière à créer des zones présentant des propriétés d'absorption d'énergie différentes. Dans un mode de réalisation particulier, l'entraxe 11 entre les éléments d'absorption de chocs 6 consécutifs augmente depuis l'élément d'absorption de chocs 6 le plus central, c'est-à-dire l'élément d'absorption de chocs 6 le plus éloigné des extrémités longitudinales de la base 5, vers les éléments d'absorption de chocs 6 les plus excentrés, c'est-à-dire les éléments d'absorption de chocs 6 les plus proches des extrémités longitudinales de la base 5.

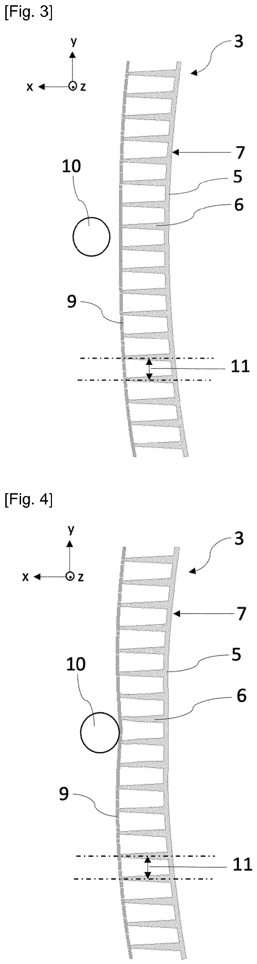

On présente ci-dessous, par référence aux figures 3 à 7 les différentes étapes d'absorption d'un choc entre une jambe 10 d'un piéton et l'absorbeur de chocs 6 décrit aux figures 1 et 2. Sur les figures 3 à 7, seules une portion de l'absorbeur de chocs 6 des figures 1 et 2 est représentés. Par soucis de clarté, les seuls éléments utilisés pour représenter ce choc sont la jambe 10, la peau 9 du parechoc 2 et une partie de l'absorbeur de chocs 3.

La figure 3 représente l'étape qui précède le choc. La jambe 10 n'est pas encore entrée en contact avec la peau 9 du parechoc avant 2 du véhicule 1. Cette dernière n'a donc pas encore été déformée.

La figure 4 représente la première étape du choc. La jambe 10 est entrée en contact avec la peau 9 du parechoc avant 2 et a commencé à la déformer. Étant donné que les éléments d'absorption de chocs 6 sont en contact de la peau 9, les deux éléments d'absorption de chocs 6 qui sont situés derrière l'endroit où la peau a été déformée par la jambe 10 commence à être compressés selon l'axe X. Cette première compression permet l'absorption d'une première partie de l'énergie du choc avec uniquement une sollicitation en compression des deux éléments d'absorption de chocs 6.

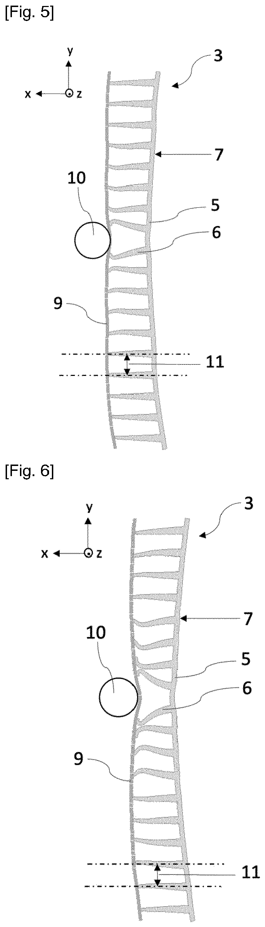

La figure 5 représente une deuxième étape du choc. La jambe 10 déforme encore un peu plus la peau 9. Les deux éléments d'absorption de chocs 6 initialement impliqués dans le choc commence à déverser latéralement, c'est-à-dire selon l'axe Y. En outre, la déformation de la peau 9 entraine la déformation par compression de six autres éléments d'absorption de chocs 6 qui correspondent aux trois éléments d'absorption de chocs 6 qui sont situés de part et d'autre des deux éléments d'absorption de chocs 6 initialement impliqués dans le choc. À ce stade, on peut donc noter que l'absorption du choc a lieu grâce au déversement latéral des deux éléments d'absorption de chocs 6 initialement impliqués dans le choc et à la compression de six autres éléments d'absorption de chocs 6. Cette répartition permet de réguler l'effort appliqué en retour contre la jambe 10. Cela évite notamment que l'absorbeur de chocs 3 ne travaille qu'en compression, auquel cas l'effort appliqué en retour sur la jambe 10 augmenterait trop rapidement. Cela évite également que l'absorbeur de chocs 3 ne travaille qu'en déversement latéral, auquel cas l'absorption de l'énergie du choc ne serait pas suffisante.

La figure 6 représente une troisième étape du choc. La jambe 10 déforme encore un peu plus la peau 9. Les deux éléments d'absorption de chocs 6 impliqués initialement dans le choc continuent à être déversés latéralement et viennent chacune prendre appui sur l'élément d'absorption qui le jouxte. Ainsi, le phénomène de déversement est ralenti et permet une meilleure absorption d'énergie en évitant un déversement trop brutal. Les six autres éléments d'absorption de chocs 6 qui étaient impliqués à la deuxième étape du choc continuent à être compressés mais commencent eux-aussi à déverser latéralement. Du fait de la déformation de la peau 9, six nouveaux absorbeurs de chocs 6 sont déformés en compression selon l'axe X. Il s'agit des trois éléments d'absorption de chocs 6 situés de part et d'autre des éléments d'absorption de chocs 6 qui étaient déjà impliqués dans le choc. À ce stade, on peut donc noter que l'absorption du choc a lieu grâce au déversement latéral et à la compression de quatorze absorbeurs de chocs 6, deux travaillant uniquement par déversement latéral, six travaillant à la fois en déversement latéral et en compression, et six travaillant uniquement en compression. Cette répartition plus importante permet de continuer à réguler à un niveau quasiment constant l'effort appliqué en retour sur la jambe 10 ce qui réduit le risque de l'endommager.

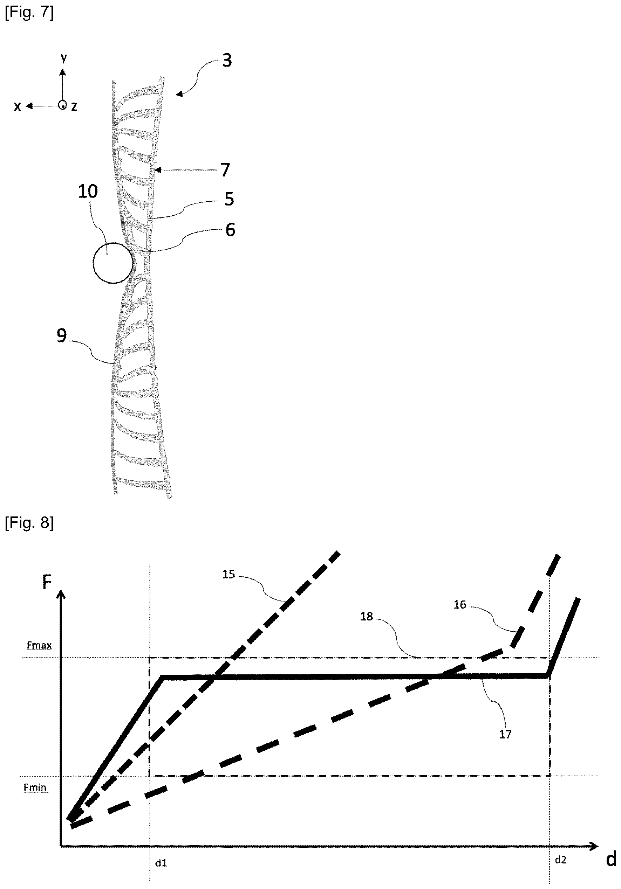

La figure 7 représente une quatrième étape du choc. À ce stade, tous les éléments d'absorption de chocs 6 sont impliqués dans l'absorption du choc et tous sont à un stade plus ou moins important de déversement latéral et s'empêchent mutuellement de déverser complètement.

Cette déformation par déversement étant moins capable d'absorber d'énergie qu'en compression, la régulation de l'effort global sensiblement constant est compensée par le nombre important d'éléments d'absorption impliqués.

La figure 8 est un graphique qui représente schématiquement l'effort appliqué sur la jambe 10 lors d'un choc avec la peau 9 et l'absorbeur de choc 3 du parechoc avant 2 en fonction de l'enfoncement (d). La courbe 15 correspondrait au cas où l'absorbeur de chocs présente une section pleine et massive sur la portion sollicitée dans la zone d'impact, comme par exemple une section rectangulaire ou trapézoïdale pleine. La courbe 16 correspondrait au cas où l'absorbeur de chocs présente une section en forme de « C » ou de « L ». La courbe 17 correspond au cas d'un absorbeur de chocs 3 selon l'invention. Le rectangle 18 correspond de façon simplifiée aux limites de fonctionnement recherchées pour un véhicule donné : la courbe course / effort pendant le choc doit demeurer dans ces limites pour les différents cas de choc jambe à prendre en compte. D'une part, l'effort maximal (Fmax) appliqué en retour sur la jambe 10 ne doit pas être trop important pour une déformation donnée (d1-d2) afin de ne pas risquer d'endommager la jambe 10. D'autre part, l'effort minimal (Fmin) ne doit pas être trop éloigné de l'effort maximal (Fmax) pour une déformation donnée (d1-d2) de manière à ce que l'effort appliqué sur la jambe 10 soit sensiblement constant pour cette déformation (d1-d2). En effet, le fait que l'effort soit constant permet de réduire le risque d'endommager la jambe 10. On peut par exemple prévoir que le l'effort maximal (Fmax) soit compris entre 2 000 et 4 000 N, que l'effort minimal (Fmin) soit compris entre 500 et 3 000 N avec la différence entre Fmax et Fmin qui est inférieure à 2 000 N, de préférence inférieure à 1 500 N, voire inférieure à 1 000 N. Par ailleurs, la course étudiée (d1-d2) dépend du véhicule sur lequel est monté l'absorbeur de chocs et est typiquement sensiblement égale à la longueur des éléments d'absorption de chocs.

Dans le cas d'un absorbeur de chocs avec une section pleine (courbe 15), on remarque que l'effort appliqué sur la jambe augmente linéairement avec une pente importante au fur et à mesure du choc (donc au fur et à mesure que la peau 9 est enfoncée). Lors d'un tel choc, l'effort appliqué en retour sur la jambe n'est que très succinctement dans le cadre d'effort cible 18. L'effort appliqué sur la jambe est donc trop rapidement très élevé et pourrait provoquer des dommages importants à celle-ci.

Dans le cas d'un absorbeur de choc ayant une section en « C » ou en « L » (courbe 16), on remarque que l'effort augmente aussi de façon constante et linéairement selon une pente moyenne pendant une partie du choc puis augmente de façon très importante avant d'avoir pu atteint la distance de déformation maximale d2 souhaitée. Cette courbe 16 est obtenue car les parois du « C » ou du « L » vont dans un premier temps être sollicitées en compression puis vont dans un deuxième temps être déformées en étant rapidement déversées verticalement ou, dans le cas où un élément du véhicule empêcherait ce déversement, vont continuer à être sollicitées de plus en plus en compression. On remarque qu'il n'existe aucune phase de la déformation pour laquelle l'effort appliquée en retour sur la jambe 10 est constant.

Enfin, dans le cas d'un absorbeur de chocs 3 selon l'invention, on remarque que l'effort augmente rapidement puis se stabilise pour former un plateau restant dans le cadre 18 sur toute la distance souhaitée. L'augmentation rapide de l'effort est dû à l'étape d'absorption du choc uniquement en compression. Cela permet d'arriver rapidement à une valeur proche de l'effort maximal (Fmax) tout en restant inférieure à celui-ci, ce qui permet d'absorber plus d'énergie sur la course d1-d2. On remarque que l'effort maximal (Fmax) qu'il est acceptable d'appliquer sur la jambe 10 n'est pas dépassé avec l'absorbeur de chocs 3 de l'invention pendant la course de déformation de la peau prise en compte, c'est-à-dire un enfoncement selon l'axe X de d1 à d2 mm. En outre, on remarque que, sur la plage cible, l'effort appliqué sur la jambe 10 est constant, ce qui réduit également le risque de blessure. Ce plateau permet également de rester longtemps à une valeur d'effort proche de Fmax sans la dépasser et donc d'absorber une grande quantité d'énergie sans risquer d'endommager la jambe 10.

L'invention n'est pas limitée aux modes de réalisation présentés et d'autres modes de réalisation apparaîtront clairement à l'homme du métier.

### Liste de références

1 : véhicule automobile
2 : parechoc avant
3 : absorbeur de chocs
4 : poutre rigide
5 : base de l'absorbeur de chocs 3
6 : élément d'absorption de chocs
7 : première face de la base 5
8 : deuxième face de la base 5
9 : peau du parechoc 2
10 : jambe
11 : entraxe entre les éléments d'absorption de chocs 6

## Revendications

1. Absorbeur de chocs (3) pour un véhicule automobile (1), l'absorbeur de choc étant réalisé en mousse et comprenant un ensemble d'éléments d'absorption de chocs (6) disposés de manière à former au moins une rangée, dans lequel les éléments d'absorption de chocs (6) ont une forme de lame configurée pour être orientée verticalement lorsque l'absorbeur de chocs (3) est monté sur un véhicule automobile (1), **caractérisé en ce que** les éléments d'absorption des chocs (6) se succèdent dans la rangée avec un entraxe (11) compris entre 30 et 120 mm et **en ce que** les éléments d'absorption de chocs (6) ont chacun une longueur comprise entre 50 et 120 mm et une épaisseur à mi-hauteur comprise entre 12 et 40 mm, la longueur et l'épaisseur à mi-hauteur étant telles qu'un ratio entre la longueur et l'épaisseur à mi-hauteur est compris entre 2 et 5.

2. Absorbeur de chocs (3) selon la revendication 1, dans lequel l'absorbeur de chocs est réalisé en une mousse de matériau plastique, de préférence en une mousse de polypropylène expansé.

3. Absorbeur de chocs (3) selon l'une quelconque des revendications précédentes, dans lequel la densité de la mousse est comprise entre 30 et 80 g/L.

4. Absorbeur de chocs (3) selon l'une quelconque des revendications précédentes, dans lequel l'entraxe (11) entre deux éléments d'absorption de chocs (6) consécutifs est constant dans toute la rangée.

5. Absorbeur de chocs (3) selon l'une quelconque des revendications précédentes, dans lequel l'entraxe (11) entre les éléments d'absorption de chocs (6) consécutifs dans la rangée augmente depuis l'élément d'absorption de chocs (6) le plus central, c'est-à-dire l'élément d'absorption de chocs (6) le plus éloigné des extrémités de la rangée, vers les éléments d'absorption de chocs (6) les plus excentrés, c'est-à-dire les éléments d'absorption de chocs (6) les plus proches des extrémités de la rangée.

6. Absorbeur de chocs (3) selon l'une quelconque des revendications précédentes, dans lequel au moins un des éléments d'absorption de chocs (6) présente une extrémité distale amincie, de préférence de forme arrondie.

7. Absorbeur de chocs (3) selon l'une quelconque des revendications précédentes, comprenant en outre une base (5), les éléments d'absorption de chocs (6) s'étendant en saillie à partir d'une même face (8) de la base (5).

8. Absorbeur de chocs (3) selon la revendication 7, dans lequel chaque élément d'absorption de chocs (6) s'étend sur toute une hauteur de la base (5).

9. Absorbeur de chocs (3) selon la revendication 7 ou 8, dans lequel la base (5) et les éléments d'absorption de chocs (6) sont réalisés d'une seule pièce.

10. Absorbeur de chocs (3) selon l'une quelconque des revendications précédentes, dans lequel au moins un des éléments d'absorption de chocs (6) a une forme dissymétrique.

11. Système d'absorption de chocs pour un véhicule automobile, comprenant :
- un absorbeur de chocs (3) selon l'une quelconque des revendications 1 à 10, et
- une peau (9) formant au moins une partie d'une paroi externe d'une pièce de carrosserie (2),
l'absorbeur de chocs (3) et la peau (9) étant agencés de sorte qu'une distance maximale entre une extrémité distale d'au moins une partie des éléments d'absorption de chocs (6) et la peau (9) est comprise entre 0 et 20 mm.

12. Système d'absorption de chocs pour un véhicule automobile, comprenant :
- un absorbeur de chocs (3) selon l'une quelconque des revendications 1 à 10,
- une poutre rigide (4), et
- une peau (9) formant au moins une partie d'une paroi externe d'une pièce de carrosserie (2),
dans lequel l'absorbeur de chocs (3) est fixé sur la peau (9) en regard de la poutre rigide (4),
et dans lequel le système est agencé de sorte qu'une distance maximale entre une extrémité distale d'au moins une partie des éléments d'absorption de chocs (6) et la poutre rigide (4) est comprise entre 0 et 20 mm.

13. Système d'absorption de chocs pour un véhicule automobile, comprenant :
- un absorbeur de chocs (3) selon l'une quelconque des revendications 1 à 6 et 10,
- une poutre rigide (4), et
- une peau (9) formant au moins une partie d'une paroi externe d'une pièce de carrosserie (2),
dans lequel l'absorbeur de chocs (3) comprend une base (5) présentant une première face (7) et une deuxième face (8) opposée à la première face (7),
dans lequel la base comprend au moins une première portion fixée soit à la poutre rigide (4) soit à la peau (9) par sa première face (7) et pour laquelle un premier groupe d'éléments d'absorption (6) s'étend à partir de la deuxième face (8) en direction respectivement soit de la peau (9) soit de la poutre rigide (4) en étant agencé de sorte qu'une distance maximale entre une extrémité distale d'au moins une partie des éléments d'absorption de chocs (6) du premier groupe et respectivement soit la peau (9) soit la poutre rigide (4) est comprise entre 0 et 20 mm,
et dans lequel la base (5) comprend au moins une deuxième portion pour laquelle la deuxième face (8) est libre et un deuxième groupe d'éléments d'absorption de chocs (6) s'étend à partir de la première face (7) en direction respectivement soit de la poutre rigide (4) soit de la peau (9) en étant agencé de sorte qu'une distance maximale entre une extrémité distale d'au moins une partie des éléments d'absorption de chocs (6) du deuxième groupe et respectivement soit la poutre rigide (4) soit la peau (9) est comprise entre 0 et 20 mm.

## Patentansprüche

1. Stoßdämpfer (3) für ein Kraftfahrzeug (1), wobei der Stoßdämpfer aus Schaumstoff hergestellt ist und eine Anordnung von stoßabsorbierenden Elementen (6) aufweist, die so angeordnet sind, dass sie mindestens eine Reihe bilden, wobei die stoßabsorbierenden Elemente (6) eine Blattform aufweisen, die so konfiguriert ist, dass sie vertikal ausgerichtet ist, wenn der Stoßdämpfer (3) an einem Kraftfahrzeug (1) montiert ist, **dadurch gekennzeichnet, dass** die stoßabsorbierenden Elemente (6) in der Reihe mit einem Achsabstand (11) von 30 bis 120 mm aufeinander folgen und dass die stoßabsorbierenden Elemente (6) jeweils eine Länge von 50 bis 120 mm und eine Dicke in halber Höhe von 12 bis 40 mm aufweisen, wobei die Länge und die Dicke in halber Höhe so sind, dass ein Verhältnis zwischen der Länge und der Dicke in halber Höhe 2 bis 5 beträgt.

2. Stoßdämpfer (3) nach Anspruch 1, wobei der Stoßdämpfer aus einem Schaum aus Kunststoffmaterial, vorzugsweise aus einem Schaum aus geschäumtem Polypropylen, hergestellt ist.

3. Stoßdämpfer (3) nach einem der vorhergehenden Ansprüche, wobei die Dichte des Schaumstoffs zwischen 30 und 80 g/L liegt.

4. Stoßdämpfer (3) nach einem der vorhergehenden Ansprüche, wobei der Achsabstand (11) zwischen zwei aufeinanderfolgenden stoßabsorbierenden Elementen (6) in der gesamten Reihe konstant ist.

5. Stoßdämpfer (3) nach einem der vorhergehenden Ansprüche, wobei der Achsabstand (11) zwischen aufeinanderfolgenden stoßabsorbierenden Elementen (6) in der Reihe vom zentralsten stoßabsorbierenden Element (6) aus zunimmt, d. h. dem stoßabsorbierenden Element (6), das am weitesten von den Enden der Reihe entfernt ist, zu den exzentrischsten stoßabsorbierenden Elementen (6), d. h. den Stoßdämpferelementen (6), die den Enden der Reihe am nächsten liegen.

6. Stoßdämpfer (3) nach einem der vorhergehenden Ansprüche, wobei mindestens eines der stoßabsorbierenden Elemente (6) ein verjüngtes distales Ende aufweist, das vorzugsweise eine abgerundete Form hat.

7. Stoßdämpfer (3) nach einem der vorhergehenden Ansprüche, ferner aufweisend eine Basis (5), wobei die stoßabsorbierenden Elemente (6) sich von einer gleichen Seite (8) der Basis (5) aus vorstehend erstrecken.

8. Stoßdämpfer (3) nach Anspruch 7, wobei sich jedes stoßabsorbierende Element (6) über eine gesamte Höhe der Basis (5) erstreckt.

9. Stoßdämpfer (3) nach Anspruch 7 oder 8, wobei die Basis (5) und die stoßabsorbierenden Elemente (6) aus einem Stück gefertigt sind.

10. Stoßdämpfer (3) nach einem der vorhergehenden Ansprüche, wobei mindestens eines der stoßabsorbierenden Elemente (6) eine asymmetrische Form aufweist.

11. Stoßdämpfersystem für ein Kraftfahrzeug, aufweisend:
- einen Stoßdämpfer (3) nach einem der Ansprüche 1 bis 10, und
- eine Haut (9), die mindestens einen Teil einer Außenwand eines Karosserieteils (2) bildet,
wobei der Stoßdämpfer (3) und die Haut (9) so angeordnet sind, dass ein maximaler Abstand zwischen einem distalen Ende mindestens eines Teils der stoßabsorbierenden Elemente (6) und der Haut (9) zwischen 0 und 20 mm liegt.

12. Stoßdämpfendes System für ein Kraftfahrzeug, umfassend:
- einem Stoßdämpfer (3) nach einem der Ansprüche 1 bis 10,
- einem starren Träger (4), und
- einer Haut (9), die zumindest einen Teil einer Außenwand eines Karosserieteils (2) bildet,
wobei der Stoßdämpfer (3) an der Haut (9) gegenüber dem starren Träger (4) befestigt ist,
und wobei das System so angeordnet ist, dass ein maximaler Abstand zwischen einem distalen Ende von mindestens einem Teil der stoßabsorbierenden Elemente (6) und dem starren Träger (4) zwischen 0 und 20 mm liegt.

13. Stoßdämpfersystem für ein Kraftfahrzeug, umfassend:
- einem Stoßdämpfer (3) nach einem der Ansprüche 1 bis 6 und 10,
- einem starren Träger (4), und
- einer Haut (9), die zumindest einen Teil einer Außenwand eines Karosserieteils (2) bildet,
wobei der Stoßdämpfer (3) eine Basis (5) mit einer ersten Seite (7) und einer zweiten Seite (8) gegenüber der ersten Seite (7) aufweist, wobei die Basis mindestens einen ersten Abschnitt aufweist, der mit seiner ersten Seite (7) entweder an dem starren Träger (4) oder an der Haut (9) befestigt ist und bei dem sich eine erste Gruppe von stoßabsorbierenden Elementen (6) von der zweiten Seite (8) aus jeweils in Richtung entweder der Haut (9) oder des starren Trägers (4) erstreckt, und so angeordnet ist, dass ein maximaler Abstand zwischen einem distalen Ende von mindestens einem Teil der stoßabsorbierenden Elemente (6) der ersten Gruppe und entweder der Haut (9) bzw. dem starren Träger (4) zwischen 0 und 20 mm liegt, und wobei die Basis (5) mindestens einen zweiten Abschnitt aufweist, für den die zweite Seite (8) frei ist und eine zweite Gruppe von stoßabsorbierenden Elementen (6) sich von der ersten Seite (7) jeweils in Richtung entweder des starren Trägers (4) oder der Haut (9) erstreckt, wobei sie so angeordnet ist, dass ein maximaler Abstand zwischen einem distalen Ende von mindestens einem Teil der stoßabsorbierenden Elemente (6) der zweiten Gruppe und entweder dem starren Träger (4) bzw. der Haut (9) zwischen 0 und 20 mm liegt.

## Claims

1. Shock absorber (3) for an automotive vehicle (1), the shock absorber being made of foam and comprising a set of shock absorbing elements (6) arranged so as to form at least one row, wherein the shock absorbing elements (6) have a blade shape configured to be oriented vertically when the shock absorber (3) is mounted on an automotive vehicle (1), **characterized in that** the shock absorbing elements (6) follow one another in the row with a center distance (11) of between 30 and 120 mm and **in that** the shock absorbing elements (6) each have a length between 50 and 120 mm and a thickness at mid-height between 12 and 40 mm, the length and the thickness at mid-height being such that a ratio between the length and the thickness at mid-height is comprised between 2 and 5.

2. Shock absorber (3) according to claim 1, wherein the shock absorber is made of a foam of plastic material, preferably an expanded polypropylene foam.

3. Shock absorber (3) according to any one of the preceding claims, wherein the density of the foam is comprised between 30 and 80 g/L.

4. Shock absorber (3) according to any one of the preceding claims, wherein the center distance (11) between two consecutive shock absorption elements (6) is constant throughout the row.

5. Shock absorber (3) according to any one of the preceding claims, wherein the center distance (11) between the consecutive shock absorption elements (6) in the row increases from the most central shock absorption element (6), i.e., the shock absorption element (6) farthest from the ends of the row, to the shock absorption elements (6) the most offset, i.e., the shock absorbing elements (6) closest to the ends of the row.

6. Shock absorber (3) according to any one of the preceding claims, wherein at least one of the shock absorbing elements (6) has a thinned distal end, preferably rounded in shape.

7. Shock absorber (3) according to any one of the preceding claims, further comprising a base (5), the shock absorbing elements (6) extending from a same face (8) of the base (5).

8. Shock absorber (3) according to claim 7, wherein each shock absorbing element (6) extends over a whole height of the base (5).

9. Shock absorber (3) according to claim 7 or 8, wherein the base (5) and the shock absorbing elements (6) are made of a single piece.

10. Shock absorber (3) according to any one of the preceding claims, wherein at least one of the shock absorbing elements (6) has a dissymmetrical shape.

11. Shock absorption system for an automotive vehicle, comprising:
- a shock absorber (3) according to any one of claims 1 to 10, and
- a skin (9) forming at least part of an outer wall of a body part (2), the shock absorber (3) and the skin (9) being arranged so that a maximum distance between a distal end of at least part of the shock absorbing elements (6) and the skin (9) is comprised between 0 and 20 mm.

12. Shock absorption system for an automotive vehicle, comprising:
- a shock absorber (3) according to any one of claims 1 to 10,
- a rigid beam (4), and
- a skin (9) forming at least part of an outer wall of a body part (2), wherein the shock absorber (3) is fixed to the skin (9), facing the rigid beam (4),
and wherein the system is arranged in such a way that a maximum distance between a distal end of at least part of the shock absorbing elements (6) and the rigid beam (4) is comprised between 0 and 20 mm.

13. Shock absorption system for an automotive vehicle, comprising:
- a shock absorber (3) according to any one of claims 1 to 6 and 10,
- a rigid beam (4), and
- a skin (9) forming at least part of an outer wall of a body part (2), wherein the shock absorber (3) comprises a base (5) having a first side (7) and a second side (8) opposite to the first side (7),
wherein the base comprises at least a first portion attached either to the rigid beam (4) or to the skin (9) by its first side (7) and for which a first group of absorbing elements (6) extends from the second side (8) towards respectively either the skin (9) or the rigid beam (4) while being arranged so that a maximum distance between a distal end of at least part of the shock absorbing elements (6) of the first group and respectively either the skin (9) or the rigid beam (4) is comprised between 0 and 20 mm,
and wherein the base (5) comprises at least a second portion for which the second side (8) is free and a second group of shock absorbing elements (6) extends from the first side (7) towards respectively either the rigid beam (4) or the skin (9) while being arranged so that a maximum distance between a distal end of at least part of the shock absorbing elements (6) of the second group and respectively either the rigid beam (4) or the skin (9) is comprised between 0 and 20 mm.
